# FASCICULE DE BREVET EUROPEEN

(11) **EP 3 926 225 B1**
(45) Date de publication et mention de la délivrance du brevet: **10.04.2024**
(21) Numéro de dépôt: 21180218.6
(22) Date de dépôt: 18.06.2021
(51) Int. Cl.: F16L 37/00, F16L 37/23, F16L 37/56, F16L 39/00

(54) **DISPOSITIF DE CONNEXION ET ENSEMBLE DE CONNEXION**
VERBINDUNGSVORRICHTUNG UND VERBINDUNGSGRUPPE
CONNECTION DEVICE AND CONNECTION ASSEMBLY

(30) Priorité: 19.06.2020 FR 2006461
(43) Date de publication de la demande: 22.12.2021
(73) Titulaire: Staubli Faverges, 74210 Faverges-Seythenex (FR)
(72) Inventeur: TIBERGHIEN, Alain-Christophe, 74320 SEVRIER (FR); GUIN, Philippe, 74000 ANNECY (FR); BERTOLI, Gérald, 74370 NAVES PARLEMAN (FR)
(74) Mandataire: Lavoix

(56) Documents cités:
- EP-A1- 2 398 610
- EP-A1- 2 623 835
- WO-A2-2013/074047
- DE-U1- 20 212 265
- US-A- 3 214 195

## Description

La présente invention concerne un dispositif de connexion entre deux plaques, ainsi qu'un ensemble de connexion comprenant un tel dispositif.

Il est connu, dans les domaines de l'industrie sidérurgique et de la fonderie, d'alimenter une cellule de coulée continue, par exemple un répartiteur de laminoir, à partir d'un manège de poches de transfert mobiles remplies de métal en fusion à déverser en position de travail. Le balai des poches de transfert entre le poste de travail, un poste d'attente et des postes de maintenance, se réalise dans un environnement sévère (plus de 200°C), sans opération manuelle possible et implique donc des opérations robotisées pour manoeuvrer les poches de transfert et réaliser les opérations de connexion périphériques.

En effet, en sus d'un système d'actionnement d'ouverture de la poche de transfert, chaque poche de transfert présente des moyens d'apports en différents fluides ou énergies. Chaque poche est ainsi équipée d'une plaque multiconnexion, dite « plaque fixe » prévue pour l'accouplement d'une autre plaque multiconnexion complémentaire dite « plaque mobile ».

La plaque mobile est reliée à un réseau d'alimentation « amont » pneumatique, hydraulique, électrique ou autre. Chaque poche de coulée employée pour le répartiteur bénéficie alors des alimentations fluides et énergies via cette connexion temporaire et amovible.

Au poste d'attente de la poche de coulée (et de sa plaque fixe), une cellule robotisée, côté plaque mobile, assure la manoeuvre de rapprochement et d'accouplement des plaques multiconnexion. En particulier, un robot est chargé de mener partiellement l'opération de centrage et rapprochement des deux plaques. Une étape consiste à rapprocher les plaques sous l'action du robot, notamment à engager une tige centrale de la plaque mobile dans la plaque fixe afin de l'y verrouiller.

Enfin une dernière étape consiste, à partir d'une valeur seuil de rapprochement axial des plaques, en ce qu'un mécanisme de tige au centre des plaques prenne le relai du robot et assure le rapprochement final des plaques et leur verrouillage, à une vitesse et sous un effort maitrisés. Cette étape est opérée par un dispositif de connexion objet de la présente invention et non plus par le robot.

Il est donc nécessaire, après engagement de la tige dans la plaque fixe à l'aide des moyens robotisés, de verrouiller son positionnement dans la plaque et d'engager le rapprochement des plaques à l'aide d'un piston solidaire de la tige pour sécuriser l'accouplement des plaques multiconnexion.

WO-2013/074 047-A2 décrit, par exemple, un dispositif manuel de verrouillage, dont les étapes de fonctionnement ne sont pas détaillées.

EP 0247956 décrit un mécanisme de verrouillage pour assembler les éléments de raccordement d'éléments de supports. Un mécanisme de verrouillage est incorporé à l'élément mobile pour accueillir et verrouiller la tige tubulaire de l'élément de support fixe. Après encliquetage du verrou sur la tige par action manuelle, le rapprochement des deux éléments de support est opéré en force par une assistance pneumatique ou hydraulique d'un piston.

Cependant la solution d'encliquetage nécessite des moyens spécifiques à ressort et peut être activée même si les éléments de supports sont encore rapprochés ce qui est dangereux pour l'installation. De plus la position de rapprochement des éléments de supports n'est pas verrouillée.

EP 2226140 décrit un dispositif de commande d'ouverture et de fermeture d'une valve de régulation pour la coulée de métal liquide, comprenant des moyens de couplage d'un cylindre extérieur de l'entrainement à un logement d'une valve et un système de verrouillage d'une tige à la valve. Le verrouillage et le couplage du cylindre du dispositif d'entrainement à la valve sont réalisées simultanément au niveau respectivement d'un logement solidaire de la valve et au niveau d'un logement distant de façon hydraulique par une centrale de commande. Au déverrouillage, la centrale de commande découple les moyens de couplage et déverrouille également le cylindre de façon hydraulique.

Pour ouvrir ou fermer la valve, il est nécessaire que la centrale de commande gère plusieurs canalisations ce qui n'est pas avantageux et multiplie les circuits et les moyens d'étanchéité de chambres de façon coûteuse. De plus la sécurité du verrouillage est liée à la connexion et au maintien de pression dans les chambres hydrauliques ce qui n'est pas entièrement satisfaisant. Contrairement à des positions mécaniques stabilisées, dites inviolables, qui subsistent malgré des fuites potentielles, les éléments de EP 2226140 sont soumis à différentes forces de pression ce qui ne garantit pas dans le temps le fonctionnement et entraine des risques de dysfonctionnement. DE20212265U décrit un ensemble de connexion entre une plaque mobile et une plaque fixe, comprenant au moins un premier élément de raccordement de circuit, un organe de centrage, et un dispositif de connexion.

C'est à ces inconvénients qu'entend remédier l'invention en proposant un nouveau dispositif de connexion pour plaques multiconnexion qui améliore l'état de la technique dans le domaine de la connexion pour l'industrie sidérurgique.

A cet effet, l'invention concerne un dispositif de connexion entre deux plaques, l'une étant une plaque fixe et l'autre étant une plaque mobile, chacune des deux plaques supportant au moins un élément de raccordement de circuit de type hydraulique, pneumatique ou/et électrique destiné à s'accoupler avec un élément de raccordement du même type sur l'autre plaque, le dispositif de connexion étant disposé sur l'une des deux plaques et comprenant :
- un corps s'étendant le long d'un axe principal et comprenant une cavité principale,
- une tige mobile en translation dans le corps le long de l'axe principal du corps,
- un piston, solidaire de la tige, mobile au sein de la cavité principale du corps et scindant la cavité principale entre une chambre avant et une chambre arrière.

Ce dispositif est caractérisé en ce que le dispositif de connexion comprend également :
un manchon qui s'étend autour de la tige, ce manchon étant mobile le long de l'axe principal par rapport au corps entre une position arrière et une position avant,
des organes de verrouillage logés dans le manchon, chaque organe de verrouillage étant mobile par rapport au manchon entre une configuration de verrouillage où chaque organe de verrouillage est écarté de l'axe principal et une configuration de dégagement où chaque organe de verrouillage est
plus proche de l'axe principal que dans la configuration de verrouillage, la tige étant mobile le long de l'axe principal entre :
   - une position déconnectée dans laquelle la tige ne s'oppose pas au déplacement des organes de verrouillage dans leur configuration de dégagement, et le manchon est en position avant,
      et une position connectée, dans laquelle la tige s'oppose au déplacement des organes de verrouillage dans leur configuration de dégagement, et le manchon est en position arrière,
      en passant par une position intermédiaire située entre la position déconnectée et la position connectée, dans laquelle la tige s'oppose au déplacement des organes de verrouillage dans leur configuration de dégagement, et le manchon est en position avant.

Grâce à l'invention, le verrouillage mécanique de la tige et le rapprochement des plaques sont obtenus grâce à une unique commande de pression sur le piston.

Selon des aspects avantageux mais non obligatoires de l'invention, un tel dispositif de connexion peut incorporer une ou plusieurs des caractéristiques suivantes, prises selon toute combinaison techniquement admissible :
- Le dispositif de connexion comprend des moyens de rappel élastique du manchon en position avant.
- Le corps présente une butée mécanique limitant le déplacement vers l'avant du manchon en position avancée de la tige.
- Les organes de verrouillage sont des billes de verrouillage, et le manchon comprend des logements radiaux aptes à guider les billes de verrouillage entre leur configuration de verrouillage et leur configuration de dégagement.
- La tige comprend une rampe de guidage des organes de verrouillage entre leur configuration de dégagement et leur configuration de verrouillage.
- La rampe de guidage présente un diamètre d'appui distal configuré pour porter les organes de verrouillage dans leur configuration de verrouillage, et la tige comprend une gorge juxtaposée sur l'arrière de la rampe de guidage et présentant un diamètre d'appui proximal qui permet le déplacement des organes de verrouillage dans la configuration de dégagement.
- Le dispositif de connexion comprend des moyens de blocage de la tige dans le corps le long de l'axe principal de la tige en position connectée.
- Les moyens de blocage comprennent au moins une bille de blocage mobile radialement dans un logement du corps de vérin entre une position en saillie, où la bille de blocage est apte à pénétrer dans une gorge de la tige et à s'opposer au déplacement axial de la tige par rapport au corps, et une position escamotée, où la bille de blocage ne pénètre pas dans la gorge de la tige.
- Les moyens de blocage comprennent également une bague de blocage mobile dans une cavité auxiliaire du corps le long de l'axe principal, entre une position de blocage dans laquelle une surface tronconique de la bague de blocage maintient la bille de blocage en saille dans la gorge de la tige, et une position de déblocage dans laquelle la bille de blocage est dans sa position escamotée et reçue dans une gorge de la bague de blocage.
- La surface tronconique de la bague de blocage définit un cône qui s'évase en direction de la gorge de la bague de blocage.
- Le dispositif comprend un élément élastique de rappel de la bague de blocage vers sa position de blocage.
- Le dispositif de connexion comprend une bague de protection entourant la tige, mobile le long de l'axe principal dans un canal interne dans laquelle la tige se déplace, et entrainée par la tige lors de son mouvement de la position intermédiaire vers sa position connectée, entre une position de protection dans laquelle la bague de protection est en regard du logement du corps de façon à maintenir la bille de blocage en position escamotée, et une position rétractée dans laquelle la bague de protection ne maintient plus la bille de blocage en position escamotée.
- La bague de blocage et la cavité auxiliaire du corps définissent une chambre reliée à une canalisation qui permet d'alimenter la chambre en fluide sous pression.
- Le dispositif comprend une première canalisation reliée à la chambre avant et une seconde canalisation reliée à la chambre arrière, la première canalisation et la seconde canalisation permettant d'alimenter respectivement la chambre avant et la chambre arrière en fluide sous pression.

L'invention concerne également un ensemble de connexion d'une plaque mobile à une plaque fixe comprenant :
- une plaque mobile supportant au moins un premier élément de raccordement de circuit,
- une plaque fixe supportant au moins un élément de raccordement complémentaire du premier élément de la plaque mobile,
- au moins un organe de centrage configuré pour positionner la plaque mobile et la plaque fixe l'une par rapport à l'autre,
caractérisé en ce qu'une des dites plaques comprend un dispositif de connexion tel que mentionné ci-dessus, l'autre des dites plaques comprenant un canon de verrouillage définissant une embouchure apte à retenir axialement les organes de verrouillages du dispositif de connexion dans le canon de verrouillage, lorsqu'ils sont dans leur configuration de verrouillage.

L'invention sera mieux comprise et d'autres avantages de celle-ci apparaîtront plus clairement à la lumière de la description qui va suivre d'un dispositif de connexion conforme à son principe, faite à titre d'exemple non limitatif en référence aux dessins annexés dans lesquels :
[Fig 1] La Figure 1 est une vue en perspective éclatée d'un ensemble de connexion conforme à l'invention, comprenant une plaque fixe et une plaque mobile ;
[Fig 2] La figure 2 est une coupe longitudinale d'un dispositif de connexion conforme à l'invention, et d'un canon de verrouillage, en position déconnectée ;
[Fig 3] La figure 3 est une coupe longitudinale du dispositif de connexion de la figure 2 dans une configuration intermédiaire verrouillée ;
[Fig 4] La figure 4 est une coupe longitudinale du dispositif de connexion de la figure 2 dans une phase transitoire de connexion ;
[Fig 5] La figure 5 est une vue à plus grande échelle du détail V à la figure 4 ;
[Fig 6] La figure 6 est une coupe longitudinale du dispositif de connexion de la figure 2 en position connectée ;
[Fig 7] La figure 7 est une vue à plus grande échelle du détail VII à la figure 6 ;
[Fig 8] La figure 8 est une coupe longitudinale du dispositif de connexion dans une première phase de déconnexion;
[Fig 9] La figure 9 est une coupe longitudinale du dispositif de connexion dans une seconde phase de déconnexion ;
[Fig 10] La figure 10 est une coupe longitudinale du dispositif de connexion dans une troisième phase de déconnexion ;
[Fig 11] La figure 11 est une coupe longitudinale du dispositif de connexion dans une quatrième phase de déconnexion ;

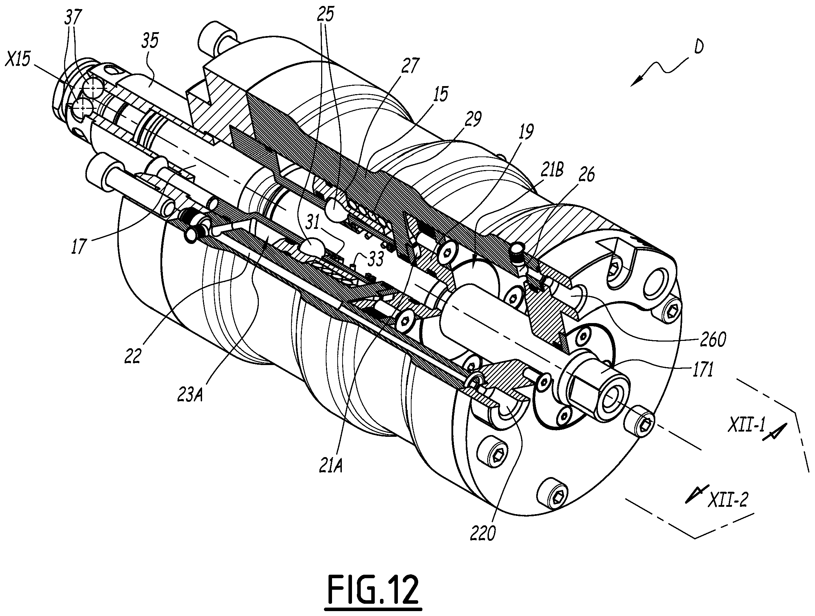

[Fig 12] La figure 12 est une vue en perspective partiellement sectionnée du dispositif de connexion de la figure selon les plans XII-1 et XII-2;
[Fig 13] La figure 13 est une vue en perspective partiellement sectionnée du dispositif de connexion selon les plans XIII-1 et XIII-2;
[Fig 14] La figure 14 est une coupe longitudinale d'un dispositif de connexion conforme à un second mode de réalisation de l'invention.

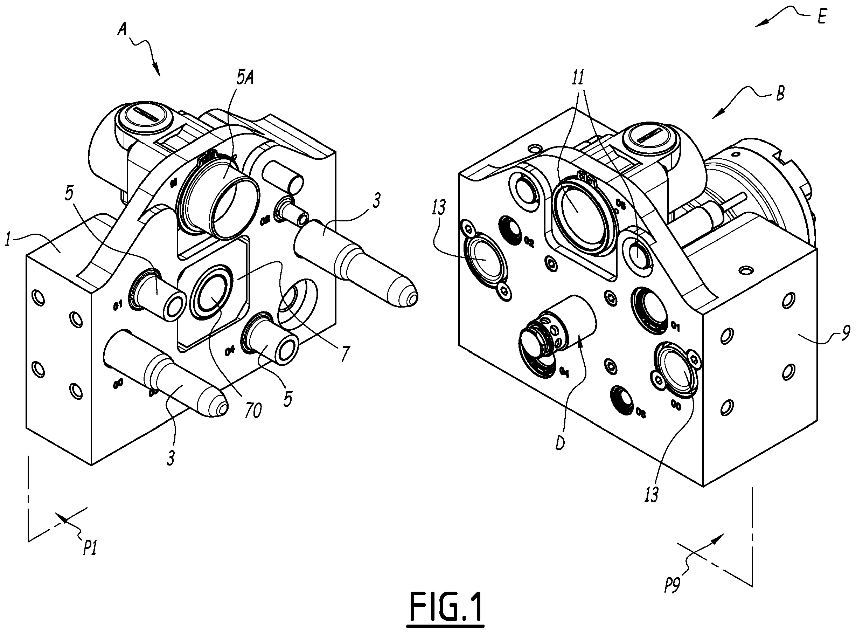

La figure 1 représente un ensemble de connexion E d'une plaque fixe A et d'une plaque mobile B complémentaire de la plaque fixe A. L'ensemble de connexion E comprend la plaque fixe A, la plaque mobile B, et un dispositif de connexion D.

On définit le côté avant, ou distal d'une plaque comme le côté de cette plaque en regard de l'autre plaque, c'est-à-dire du côté des éléments de connexion. On définit le côté arrière, ou proximal d'une plaque comme étant le côté opposé à la face de contact d'une plaque, c'est-à-dire du côté opposé aux éléments de connexion par rapport à la plaque.

La plaque fixe A est constituée d'un corps 1 de fonderie étendu principalement dans un plan vertical. La plaque fixe A est destinée à être rapportée sur une poche de transfert non représentée, mobile ou nomade, destinée à la coulée continue de métal dans un répartiteur de machines de laminages ou de fonderie également non représenté.

La plaque fixe A offre un plan de contact P1 vertical duquel émergent différents éléments de connexion mâle 5 (par exemple pneumatique, hydraulique, électrique) et deux colonnes de guidage 3 perpendiculaires au plan de contact P1 et positionnées sur un côté du corps 1 se trouvant en vis-à-vis de la plaque mobile B. Par exemple, la plaque fixe A peut comprendre un élément de connexion supérieur 5A de forme tubulaire offrant une connexion électrique. Les éléments de connexion 5 sont reliés des circuits aval correspondants via des passages de connexion dans le corps 1.

Une zone centrale de la plaque fixe A accueille un bloc amovible cubique et creux 7. Au centre de ce bloc est positionné un canon de verrouillage 70 solidaire du bloc amovible, lui-même solidaire du corps 1, et disposant d'une embouchure cylindrique réduite qui forme une surface de butée S70 tournée vers l'arrière de la plaque fixe A. Cette surface de butée S70 est configurée pour accueillir des organes de verrouillage de la plaque mobile.

La plaque mobile B est constituée d'un corps de fonderie 9 étendu principalement dans un plan vertical. La plaque mobile B offre un plan de contact P9 dans lequel sont implantés différents éléments de connexion femelle 11 (pneumatique, hydraulique, électrique) et des douilles 13 de réception des colonnes de guidage 3, perpendiculaires au plan de contact P9 et positionnées sur un côté du corps 9 en regard de la plaque fixe A. Différents passages de connexion dans le corps 9 permettent la liaison des éléments de connexion 11 avec des circuits amont correspondants non représentés.

Le corps 9 comporte un alésage central 90, de forme cylindrique, prévu pour accueillir le dispositif de connexion D. Le dispositif de connexion D comprend un corps de vérin 15 centré sur un axe central X15. Dans la suite, les termes « axial », « radial » et dérivés sont utilisés en référence à l'axe central X15.

Le corps de vérin 15 comporte quatre parties assemblées: un corps principal 150, une bride 152, et un capot arrière 154, ainsi qu'un corps central 156. Le corps principal 150 est disposé axialement entre la bride 152 et le capot arrière 154.

Le dispositif de connexion D comporte une tige 17. La tige 17 s'étend selon un axe longitudinal confondu avec l'axe central X15 et est solidaire d'un piston 19 immobilisé sur la tige 17 et mobile dans une cavité principale 21 du corps de vérin 15 obturée par le capot arrière 154. La cavité principale 21 est définie comme une enceinte cylindrique du corps de vérin 15 étendue autour d'un axe confondu avec l'axe X15 du corps de vérin 15. Le piston 19 scinde la cavité principale 21 entre une chambre avant 21A et une chambre arrière 21B. La chambre avant 21A et la chambre arrière 21B délimitent respectivement un volume de chambre arrière et un volume de chambre avant, variables en fonction de la position relative du piston 19 dans la cavité principale 21 selon l'axe central X15. Le volume de la chambre avant 21A est notamment délimité par une paroi radiale 158 du corps principal 150 qui s'étend de façon normale à l'axe central X15 vers l'intérieur du corps principal 150.

Le piston 19 définit une surface radiale externe 190 en contact avec une paroi cylindrique 210 de la cavité principale 21. Cette surface radiale externe 190 porte un joint d'étanchéité 192 qui s'appuie sur la paroi cylindrique 210.

Le guidage en translation de la tige 17 dans le corps de vérin 15 est assuré par une surface interne 154A du capot arrière 154 percé en son centre, et une surface interne de la paroi médiane 158 du corps de vérin 15 percée en son centre. Chaque surface de guidage accueille un joint torique, chacun fixé à l'aide d'un couvercle percé rapporté axialement. La tige 17 est libre en rotation par rapport au corps de vérin 15, et selon l'axe central X15 de la cavité principale 21, mais pourrait être indexée dans une position angulaire fixe. On définit dans les positions relatives de la tige 17 par rapport au corps de vérin 15 une position déconnectée, une position connectée, et une position intermédiaire.

La tige 17 s'étend longitudinalement au-delà du capot arrière 154, et au-delà de la bride 152 du côté avant du corps de vérin 15. Une partie proximale ou arrière 171 de la tige 17 peut comporter un repère pour indiquer à l'opérateur la position de la tige 17 par rapport au corps de vérin 15.

Le corps de vérin 15 comporte une cavité auxiliaire 23 de forme cylindrique qui est délimitée axialement entre une paroi distale du corps central 156 et la paroi médiane 158, et délimitée radialement de façon intérieure par le corps central 156, qui s'étend autour de la tige 17, et de façon extérieure par le corps principal 150.

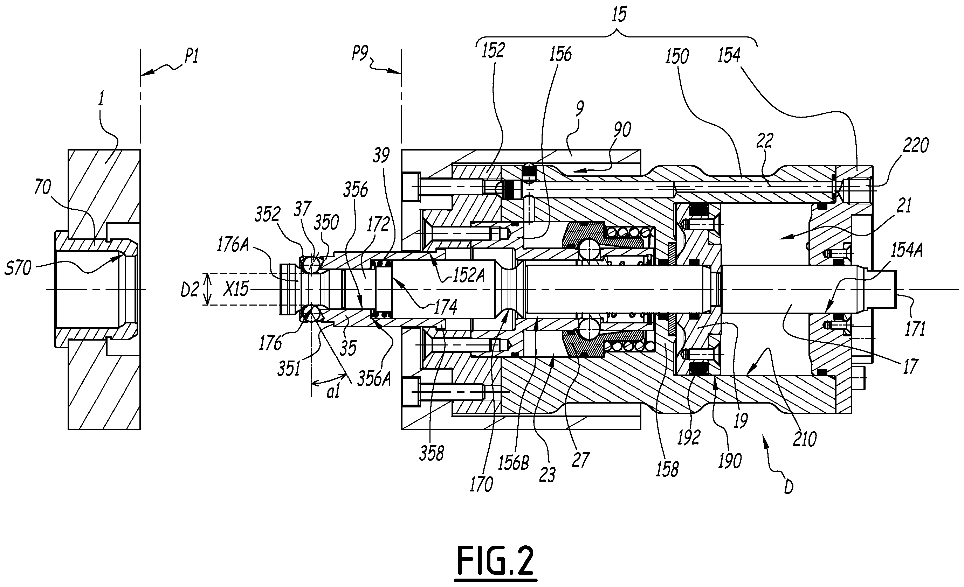

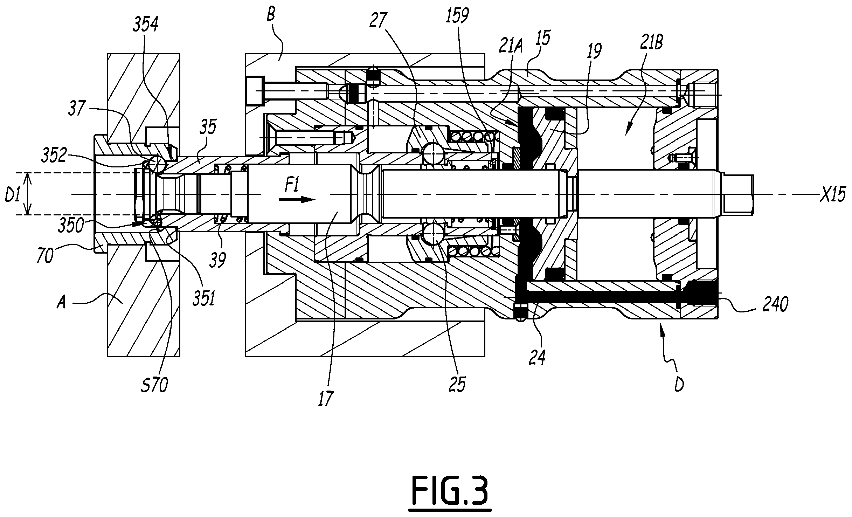

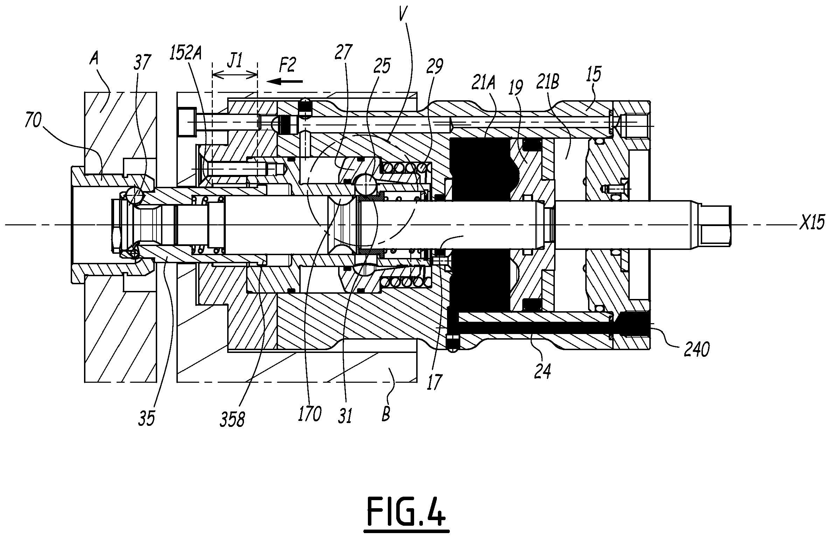

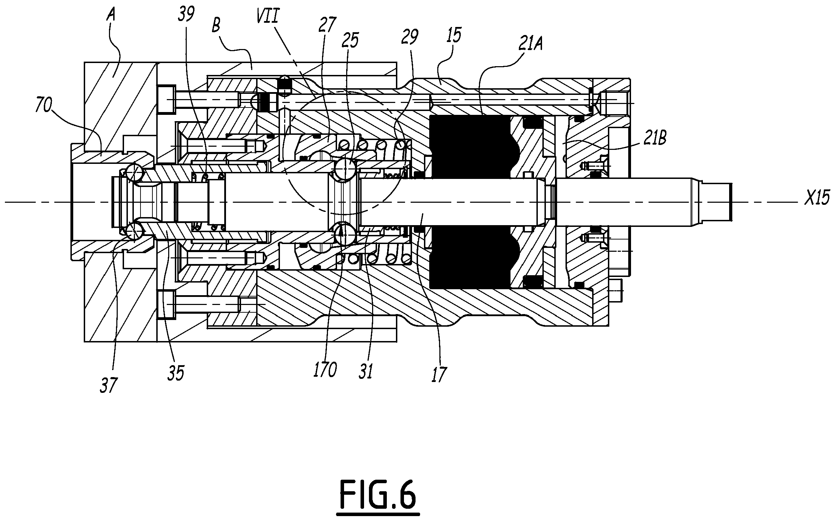

La tige 17 comprend une gorge 170 qui forme un relief en creux d'une surface externe de la tige 17. Selon le mouvement de la tige 17 par rapport au corps de vérin 15, la gorge 170 se trouve axialement en avant de la cavité auxiliaire 23 (figures 2 et 3), ou bien axialement au niveau de la cavité auxiliaire 23 (figures 4 et 6).

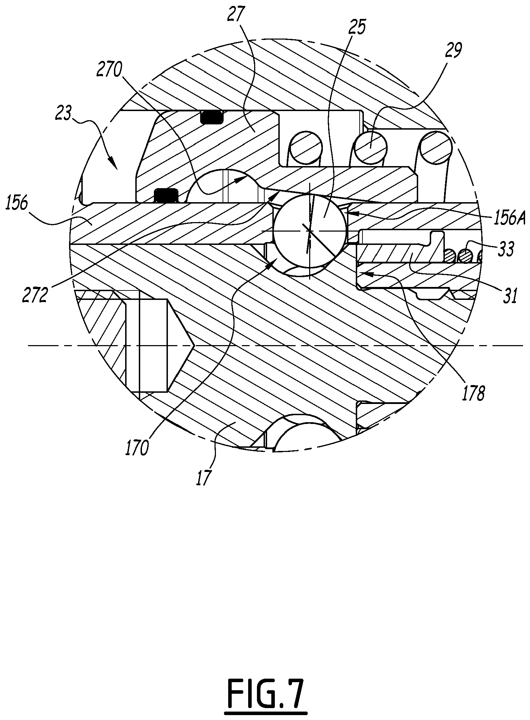

Le corps central 156 est globalement cylindrique et s'étend entre une face proximale de la bride 152 et un côté distal de la paroi médiane 158. Le corps central 156 comporte des logements radiaux 156A réalisés dans l'épaisseur de la paroi du corps central 156 et dans lesquels sont reçues des billes de blocage 25. Les billes de blocage 25 peuvent être au nombre de six, au minimum une bille de blocage 25. Les billes de blocage 25 sont mobiles radialement entre une position en saillie, représentée à la figure 7, dans laquelle les billes de blocage 25 font saillie dans la gorge 170 de la tige 17. Dans cette position, les billes de blocage 25 s'opposent au déplacement axial de la tige 17 par rapport au corps de vérin 15. Dans une autre position dite escamotée, les billes de blocage 25 ne pénètrent pas dans la gorge 25 et n'empêchent pas le déplacement axial de la tige 17.

Le corps central 156 délimite un canal interne 156B centré sur l'axe central X15, et dans lequel se déplace la tige 17.

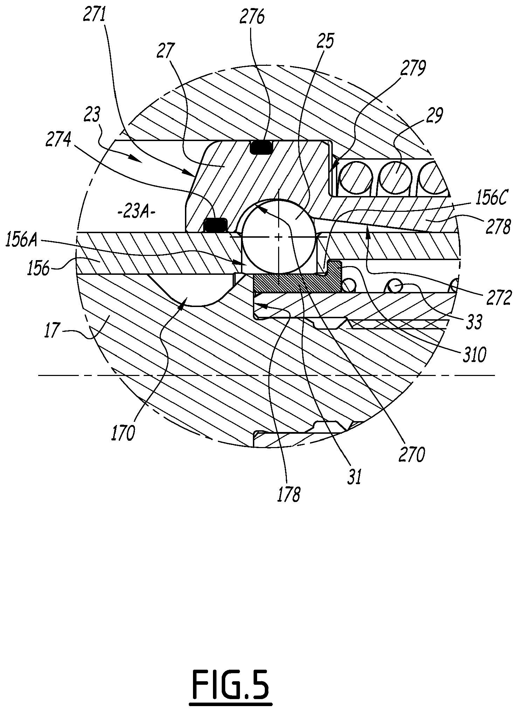

Le dispositif de connexion D comporte une bague de blocage 27 située radialement entre le corps principal 150 et le corps central 156. La bague de blocage 27 présente une gorge interne 270 qui, lorsqu'elle est alignée axialement avec les logements radiaux 156A du corps central 156, permet d'accueillir les billes de blocage 25. La bague de blocage 27 présente également une surface tronconique 272, située en arrière de la gorge interne 270, et évasée vers l'avant, c'est-à-dire en direction de la gorge interne 270. La surface tronconique 272 forme un cône dont l'angle de pente peut être environ de 5°. La bague de blocage 27 est mobile en translation dans la cavité auxiliaire 23 entre une position arrière, visible à la figure 5, où la gorge interne 270 accueille les billes de blocage 25; et une position avant, visible à la figure 7, dans laquelle la surface tronconique 272 offre une surface d'appui aux billes de blocage 25 pour les maintenir dans leur position de saillie.

La bague de blocage 27, les billes de blocage 25 et la gorge 170 forment des moyens de blocage de la tige 17 dans le corps de vérin 15 le long de l'axe principal de la tige 17 en position connectée.

La bague de blocage 27 porte deux joints toriques 274 et 276 respectivement sur ses parois interne et externe. Entre sa position avant et sa position arrière, la bague de blocage 27 forme avec le corps principal 150 et le corps central 156 une chambre de blocage 23A à volume variable, dont la section d'étanchéité est déterminée par la différence de diamètre des deux joints toriques 274 et 276. La chambre de blocage 23A est également formée avec une paroi avant 271 de la bague de blocage 27. Cette chambre de blocage 23A est destinée à être remplie d'un fluide de commande, de préférence pneumatique, via une canalisation 22 prévue dans le corps de vérin 15 et qui en débouche sur l'arrière par un orifice 220. Le corps de vérin 15 comprend un ressort de blocage 29 positionné autour d'une partie 278 de diamètre extérieur réduit de la bague de blocage 27 et en appui entre la paroi médiane 158 du corps de vérin 15 et une paroi proximale 279 de la bague de blocage 27. La bague de blocage 27 est repoussée élastiquement vers sa position avant par le ressort de blocage 29. Le fluide de commande présent dans la chambre de blocage 23A agit sur la bague de blocage 27 à l'encontre de l'effort élastique du ressort de blocage 29. L'espace annulaire dans lequel est situé le ressort de blocage 29 est soumis à la pression ambiante et ne représente pas une chambre étanche, si bien que seul l'effort élastique du ressort de blocage 29 s'oppose à l'action du fluide de commande si la pression augmente dans la chambre 23A.

Le corps de vérin 15 comprend également une bague de protection 31, positionnée dans le canal interne 156B, radialement entre le corps central 150 et la tige 17. La bague de protection 31 est entrainée axialement vers l'avant par un ressort 33 en appui sur un disque d'appui 159 apposé contre un anneau élastique, ou circlips, logé partiellement dans le corps central 156 de vérin 15. La bague de protection 31 présente une collerette 310 en saillie vers l'extérieur, et sur laquelle le ressort 33 s'appuie. La collerette 310 s'appuie sur un épaulement complémentaire 156C du corps central 156, qui réalise une fonction de butée de la bague de protection 31 lorsque celle-ci est axialement alignée avec les logements radiaux 156A des billes de blocage 25, et que la bague de protection 31 maintient les billes de blocage 25 dans une position escamotée hors du canal interne 156B.

Le dispositif de connexion D comporte un manchon 35 dont la paroi est percée radialement de logements 350 inclinés et situés du côté d'une extrémité distale 352 de ce manchon 35. Le manchon 35 s'étend autour d'une partie distale 172 de la tige 17 et est mobile axialement par rapport au corps de vérin 15 entre position avant, visible à la figure 2 et une position arrière visible à figure 6.

Les logements radiaux 350 du manchon 35 sont inclinés par rapport à l'axe central X15 d'un angle a1 compris entre 40° et 80°, de préférence égal à 60. Les logements radiaux 350 définissent des axes sécants de l'axe X15 au niveau d'un plan normal à l'axe X15 situé en avant des logements radiaux 350.

Le dispositif de connexion D comprend des organes de verrouillage, formés par des billes de verrouillage 37 logées dans les logements inclinés 350. Les billes de verrouillage 37 peuvent être au nombre de huit. Les billes de verrouillage 37 sont guidées radialement dans les logements radiaux 350 inclinés et mobiles entre une configuration de verrouillage, où les billes de verrouillage 37 sont en en saillie par rapport à une surface extérieure 354 du manchon 35, visible à la figure 3, et une configuration de dégagement visible à la figure 2. Dans cette position, les billes de verrouillage 37 prennent une position radiale plus près de l'axe principal X15 qu'en configuration de verrouillage, et sont donc escamotées par rapport à la surface externe 354.

Le manchon 35 présente une paroi interne 356 formant un épaulement 356A offrant une surface d'appui à un ressort 39 logé à l'intérieur du manchon 50 autour de la tige 17 et qui prend appui contre un épaulement 174 de la tige 17 tourné vers l'avant, de sorte que le manchon 35 est repoussé élastiquement vers l'avant. De façon alternative, des moyens de rappel élastique autres que le ressort 39 peuvent assurer le rappel élastique du manchon 35 en position avant.

La bride 152 comporte une embouchure centrale présentant un rétrécissement de diamètre tel qu'un siège 152A dans lequel coulisse le manchon 35. Le siège 152A offre une butée mécanique à un collet proximal 358 du manchon 35, dans la position avancée du manchon 35 par rapport au corps de vérin 15. Le siège 152A constitue une butée mécanique, limitant le déplacement vers l'avant du manchon 35 en position avancée de la tige 17.

De façon optionnelle, le manchon 35 peut définir, sur sa surface externe 354 à l'arrière des logements radiaux 350, une butée axiale 351 sur un diamètre élargi permettant un appui sur une face frontale du canon de verrouillage 70 de la plaque fixe A.

La tige 17 définit à son extrémité distale une gorge 176 adaptée pour réceptionner les billes de verrouillage 37 dans leur configuration de dégagement et les porter vers l'extérieur dans leur configuration de verrouillage. Sur un côté avant de la gorge 176, la tige 17 définit une rampe 176A qui est inclinée vers l'arrière de la tige 17 et aide au guidage des billes de verrouillage 37 de leur configuration de dégagement à leur configuration de verrouillage. La rampe 176A présente un diamètre d'appui distal D1 configuré pour porter les organes de verrouillage dans leur configuration de verrouillage en les écartant de l'axe central X15. La gorge 176 présente un diamètre d'appui proximal D2 qui est inférieur au diamètre d'appui distal D1 et permet donc le déplacement des organes de verrouillage vers l'axe central X15 dans la configuration de dégagement.

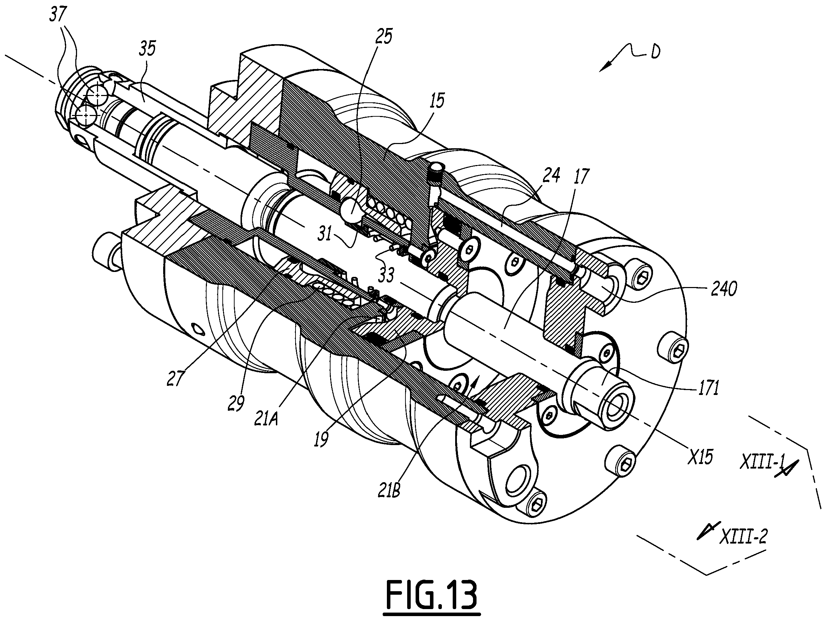

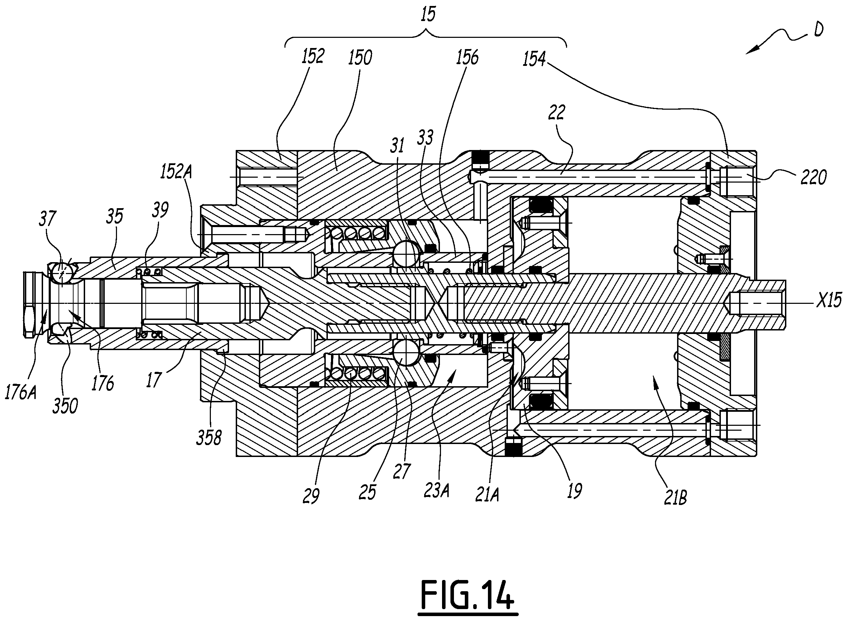

Le dispositif de connexion D comprend également un organe de commande pneumatique non représenté, tel qu'un distributeur pneumatique relié en communication à un ordinateur ou une interface homme machine, et gère la circulation du fluide de commande à travers les chambres avant et arrière 21A et 21B et la chambre de blocage 23A. Des canalisations sont aménagées selon différentes coupes dans le corps de vérin 15 visibles aux figures 13 et 14 et relient la chambre avant 21A, la chambre arrière 21B et la chambre de blocage 23A à des éléments de connexion pneumatique non représentés respectifs montés sur une partie arrière de la plaque mobile B, et qui permettent la liaison pressurisée des chambres avec le distributeur pneumatique. Notamment, au moins une canalisation 24 est prévue pour relier la chambre avant 21A, avec un port de connexion 240 sur l'arrière du corps de vérin 15, au distributeur pneumatique. Au moins une canalisation 26 est prévue pour relier la chambre arrière 21B, avec un port de connexion 260 sur l'arrière du corps de vérin 15, au distributeur pneumatique. Le distributeur bénéfice d'une pression de réseau d'air pour réguler la pression des chambres.

Le distributeur peut être à double effet pour contrôler la position du piston 19.

La chambre de blocage 23A peut être régulée par un distributeur simple effet, le retour de la bague de blocage 27 étant assuré par le ressort de blocage 29.

Le fonctionnement du dispositif de connexion D est décrit en référence aux figures 2 à 11. Les chambres dans lesquels du fluide sous pression est injecté sont colorées de noir.

Lors de la phase de connexion de la poche de transfert aux circuits d'énergie et de fluides, un opérateur ou une cellule robotisée entame le processus de connexion des plaques multi connexion fixe et mobile A et B.

La plaque mobile B est manipulée par une cellule robotisée non représentée capable de prépositionner la plaque mobile B, notamment ses douilles 13, sur les colonnes de guidage 3 de la plaque fixe A, et de réaliser un rapprochement mutuel, partiel, de la plaque fixe A et de la plaque mobile B.

Le guidage axial des plaques fixe et mobile A et B, l'alignement des éléments de connexion entre eux, et le centrage de la tige 17 par rapport au canon de verrouillage 70 sont réalisés par les colonnes de guidage 3 durant la suite du processus.

Lorsque la plaque mobile B se trouve à une distance de la plaque fixe A de l'ordre de 30 mm, par exemple 24 mm, la tige 17 s'engage dans le canon de verrouillage 70 de la plaque fixe A. Les billes de verrouillage 37 sont libres de se rétracter en configuration de dégagement, car elles sont alignées avec la gorge 176, la tige 17 étant en position déconnectée (figure 2) pour pouvoir être insérée dans la plaque fixe A. Le manchon 35 est en position avant.

Un détecteur de fin de course, tel qu'un capteur de proximité non représenté, signale à la cellule robotisée que la plaque mobile B a atteint le point auquel le système de commande pneumatique est censé déclencher le recul de la tige 17. Le dispositif D prend le relais du robot pour rapprocher les plaques A et B. Avec un maintien par le robot de la plaque fixe A avec une certaine tolérance de déplacement axial, le système de commande pneumatique commande l'alimentation de la chambre avant 21A et autorise l'échappement du volume d'air contenu dans la chambre arrière 21B. L'augmentation de pression dans la chambre avant 21A a pour effet l'entrainement de la tige 17 vers l'arrière par rapport au corps de vérin 15, selon la flèche F1 à la figure 3. Cet entraînement axial d'une faible course, par exemple 4 mm, met en contact les billes de verrouillage 37 avec la rampe 176A de la tige 17. Les billes de verrouillage 37 sont poussées radialement vers l'extérieur par la rampe 176A et atteignent donc leur configuration de verrouillage contre la surface S70. Les billes de verrouillage 37 forment des moyens de retenue axiale de la plaque mobile B par rapport à la plaque fixe A, par la limitation de déplacement relatif de la tige 17 et du piston 19 avec le canon de verrouillage 70.

Le manchon 35 a atteint une position avant, avancée par rapport à la tige 17, tout en restant en butée contre le siège 152A de la bride 152. Selon un aspect optionnel, le manchon 35 prend appui contre le canon de verrouillage 70 par sa butée 351.

La tige 17 se trouve alors à une position intermédiaire (figure 3), dans laquelle elle est verrouillée dans la plaque fixe A. La rampe 176A empêche les billes de verrouillage 37 de retourner vers leur configuration de dégagement. Une partie de la tige 17 dépasse à l'arrière de la plaque mobile B de façon plus importante qu'à la position déconnectée, ce qui signale la réalisation de l'étape de verrouillage de la tige 17 dans la plaque fixe A.

Dans la suite du processus de connexion, la cellule robotisée cesse de manoeuvrer la plaque mobile B, la position de la plaque mobile B étant déterminée par la commande de la position axiale de la tige 17 par rapport au corps de vérin 15.

Le manchon 35 étant en appui contre le canon de verrouillage 70, et la tige 17 étant maintenue en arrière par le ressort 39, le manchon 35 et la tige 17 forment un arbre de déplacement pour guider axialement le corps de vérin 15 et la plaque mobile B dans sa phase finale de rapprochement de la plaque fixe A.

Le manchon 35 peut ne pas arriver en butée sur le canon de verrouillage 70. Dans ce cas, la position du corps de vérin 15 et la tige 17 par rapport à la plaque fixe A peut présenter un certain flottement axial sans conséquence sur la sécurité de l'ensemble de connexion E.

L'alimentation de la chambre avant 21A se poursuit et entraine une augmentation de volume qui tend à repousser le piston 19 vers l'arrière et à repousser le corps de vérin 15 et la plaque mobile B vers l'avant selon la flèche F2 à la figure 4. Les billes de blocage 25 restent maintenues dans la gorge 270 de la bague de blocage 27 par la bague de protection 31, elle-même entrainée vers l'avant par son ressort 33, dans une position de protection de la tige 17 alignée avec les logements 156A. La bague de protection 31 progresse le long de la tige 17 sous l'effet du recul de celle-ci, la bague de protection 31 se rapprochant de la gorge 170 de la tige 17 jusqu'à arriver en butée contre un épaulement 178 de la tige 17 bordant vers l'arrière la gorge 170 (figure 5).

Au fur et à mesure du rapprochement des plaques A et B, un jeu axial J1 se forme entre la collerette 358 du manchon 35 et le siège 152A.

Dans la fin de course de rapprochement des plaques A et B, à la figure 6, les billes de blocage 25 viennent s'aligner axialement avec la gorge 170, et ne sont plus maintenues par la bague de protection 31 qui est repoussée vers l'arrière par l'épaulement 178, à l'encontre de l'effort du ressort 33, dans une position rétractée, dans laquelle les billes de blocage 25 ne sont plus maintenues dans la gorge 270. Les billes de blocage 25 sont alors poussées radialement dans la gorge 170, par la surface tronconique 272 de sorte qu'elles ne font plus saillie vers la bague de blocage 27. La bague de blocage 27, soumise à l'effort élastique du ressort 29, est entrainée vers l'avant. La surface tronconique 272 prend appui sur les billes de blocage 25 pour les maintenir dans la gorge 170 au travers de leur logement 156A de corps central 156 de vérin. La tige 17 est donc bloquée axialement, comme cela est visible aux figures 6 et 7.

Dans la configuration de la figure 6, les plaques A et B sont en contact surfacique, le corps de vérin 15, via son corps central 150, est bloqué sur la tige 17, elle-même verrouillée sur l'avant au canon de verrouillage 70. Les raccords périphériques 5 et 11 de connexion des plaques A et B sont accouplés de sorte que les circuits pneumatiques, hydrauliques, etc. sont établis entre les plaques A et B, et plus largement entre les réseaux fluides/énergies et la poche de transfert. L'ensemble de connexion E est en position connectée, la position est détectée par un capteur de contact. La tige 17 est alors en position connectée.

En position accouplée des plaques, des efforts de répulsion de l'ordre de 150 daN liés à l'ensemble des circuits de connexion des plaques tendent à repousser les plaques A et B entre elles. Ces efforts tendent à repousser les billes de blocage 25 vers l'arrière au contact de la paroi proximale de la gorge, ce qui tend à les repousser de manière centrifuge dans leur logement, au contact de la paroi tronconique interne de la bague de blocage. La pente est faible, de sorte que l'effort centripète ne crée pas une composante axiale opposée au ressort qui soit assez faible pour repousser déplacer la bague de blocage à l'encontre de son ressort.

La position accouplée des plaques est garantie par le blocage mécanique des billes de blocage 25 dans la tige 17 par rapport au corps de vérin 15, ce qui assure un maintien mécanique accouplé de l'ensemble de connexion E pour sécuriser l'installation lors des opérations d'alimentation des circuits. Suite aux opérations d'alimentation, les plaques A et B sont amenées à être déconnectées. Le démarrage de l'écartement des plaques A et B est conditionné par le déblocage des billes de blocage 25 par la bague de blocage 27 pour libérer la translation du corps de vérin 15 par rapport à la tige 17.

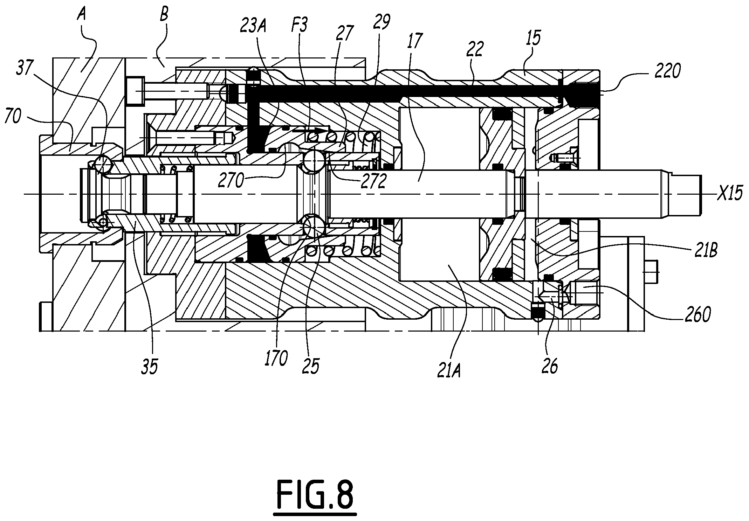

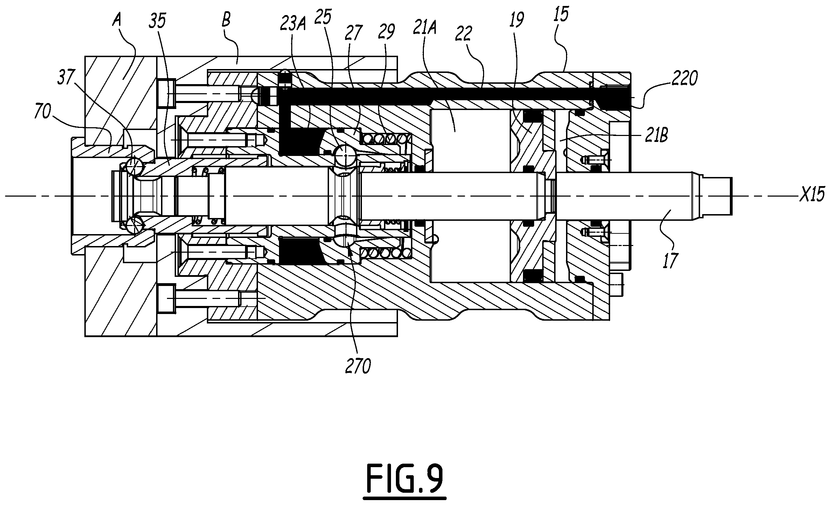

La mise en pression de la chambre de blocage 23A provoque un déplacement de la bague de blocage 27 vers l'arrière, selon la flèche F3 à la figure 8, à l'encontre du ressort 29. Les billes de blocage 25 peuvent alors venir se loger dans la gorge 270 de la bague de blocage 27, comme cela est visible à la figure 9.

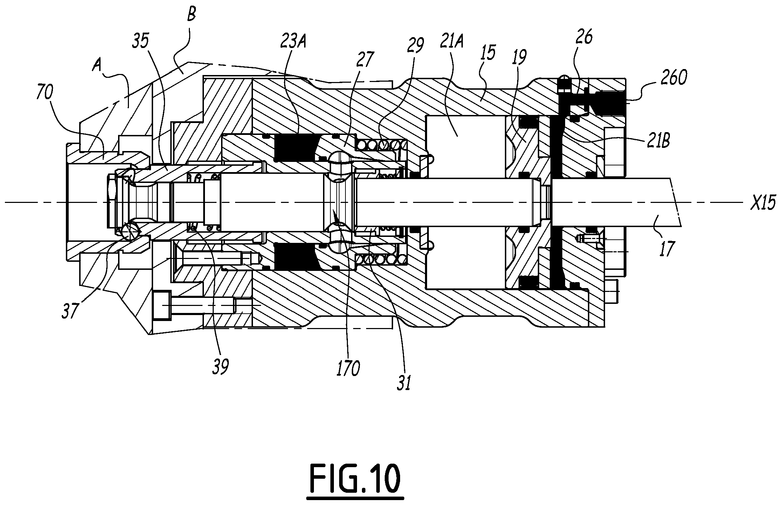

La bague de blocage 27 revenue en position arrière ou position de déblocage, la manoeuvre d'écartement des plaques A et B débute à la figure 10 par l'alimentation de la chambre arrière 21B, tout en maintenant la chambre de blocage 23A sous pression pour ne pas autoriser le retour de la bague de blocage 27 en position avancée.

La chambre arrière 21B se remplit et l'effort de pression créé entraine le corps de vérin 15 vers l'arrière par rapport à la tige 17. Le mouvement relatif entre le corps de vérin 15 et la tige 17 provoque le retour vers l'avant de la bague de protection 31 sous l'action du ressort 33, et le positionnement des billes de blocage 25 autour de la bague de protection 31. La bague de protection 31 retrouve un rôle de maintien des billes de blocage 25 dans leur position escamotée, logées dans la gorge 270 de la bague de blocage 27.

L'opération d'écartement se poursuit jusqu'à atteindre la fin de course, détectée par les moyens associés, tel que le capteur de proximité non représenté. A cette distance, le manchon 35 est en appui contre le canon de verrouillage 70, et en appui ou quasi en appui sur le siège 152A de la bride 152. Le robot est capable de saisir à nouveau la plaque mobile B. La tige 17 est en position intermédiaire.

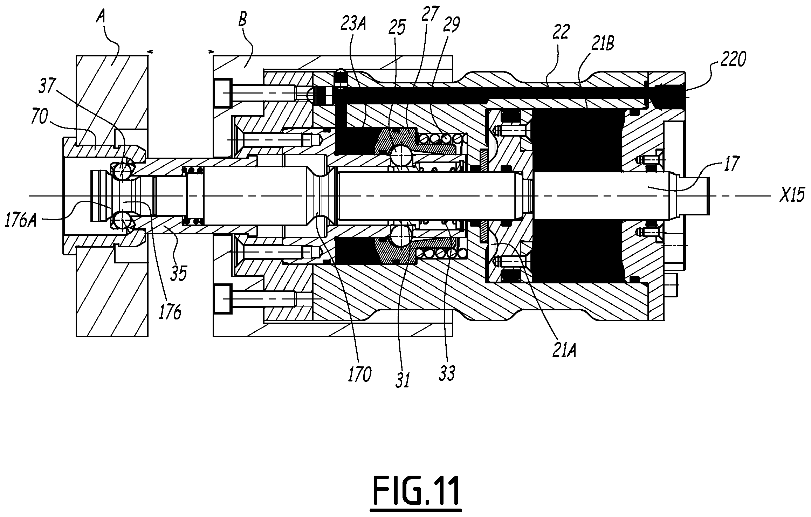

Le maintien de la plaque mobile B combiné à une pression de chambre arrière 21B entraine la translation de la tige 17 vers l'avant, alors que le manchon 35 est maintenu en position de contact avec la bride 152. Cette opération libère les billes de verrouillage 37 de leur position écartée (figure 11). Les billes de verrouillage 37 reprennent position dans la gorge distale de la tige 17. La tige 17 est en position déconnectée. Grâce à la limitation du mouvement du manchon 35 vers l'avant par le siège 152A à l'encontre de l'effort du ressort 39 vers l'avant, les billes de verrouillage 37 ne sont plus contraintes en configuration de verrouillage. Le robot peut alors prendre le relais du dispositif de connexion D pour reculer la plaque fixe A et notamment désengager la tige 17 du canon de verrouillage 70. La séquence de désaccouplement et d'écartement des plaques A et B s'effectue de façon inverse par rapport à la manoeuvre de connexion, si bien que la plaque B reste guidée par les colonnes de guidage 3 et les douilles 13 complémentaires, et entrainée par le robot avec une certaine flottabilité.

Lorsque la cellule robotisée a suffisamment écarté la plaque mobile B de la plaque fixe A, et les douilles 13 des colonnes de guidage 3, elle prend en charge la plaque mobile B pour la manipuler hors zone, en attente d'une prochaine plaque fixe A, et donc une prochaine poche de transfert, à accoupler.

Un second mode de réalisation est représenté sur la figure 14. Dans ce mode de réalisation, les éléments communs au premier mode de réalisation portent les mêmes références et fonctionnent de la même manière.

Dans ce mode de réalisation, la bague de blocage 27 présente une cinématique inversée, mais une fonction de blocage identique. La bague de blocage 27 est mobile entre une position avant, dans laquelle les billes de blocage 25 sont reçues dans la gorge 270 de la bague de blocage 27, et une position arrière, dans laquelle la surface tronconique 272 repousse les billes de verrouillage 25 dans la gorge 170 de la tige 17. Le ressort 29 repousse la bague de blocage 27 vers sa position arrière.

L'invention procure les avantages suivants :
- Le verrouillage axial de la tige 17 par rapport au corps de vérin 15 est réalisé et maintenu par des éléments mécaniques sans nécessiter de pression ou énergie extérieure.
- La bague de blocage 27 et sa surface tronconique 272 permettent des rattrapages de jeu au cours des cycles de connexion et déconnexion.
- Une pièce assez simple de conception comme le canon de verrouillage 70 qui équipe la plaque fixe A est suffisante pour obtenir la connexion sécurisée au dispositif de connexion D.
- La bague de protection 31 évite l'usure de la tige 17 qui pourrait être due au roulement des billes de blocage 25 et à leur pression radiale directement sur la tige 17.
- Une solution pneumatique est plus viable qu'une solution motorisée et électrique dans l'environnement thermique dans lequel le dispositif de connexion D est utilisé.
- Une solution pneumatique est favorable dans un environnement inflammable contrairement aux vérins hydrauliques.
- Le verrouillage de la tige 17 dans le canon de verrouillage 70 est mécanique et indépendant d'une commande pneumatique.
- Le blocage du corps de vérin 15 par rapport à la tige 17 sécurise l'ensemble de connexion E.
- La solution de rapprochement pneumatique permet une solution compacte, peu onéreuse, adaptable (pas de pièces standard contraignantes contrairement aux moteurs du commerce), et offre une souplesse de déplacement dans un espace restreint grâce aux deux chambres pneumatiques.
- L'usage de billes de verrouillage 37 et de billes de blocage 25 permet d'éviter les déformations sous les efforts de répulsion/connexion des plaques A et B. Les billes de verrouillage 37 offrent des capacités de cyclage élevées, et surmontent les problèmes de coincement.

Selon des modes de réalisation non représentés :
La canalisation 22 d'alimentation de chambre de déblocage 23A peut communiquer fluidiquement avec la chambre arrière 21B. La commande pneumatique du corps de vérin 15 vers l'arrière par injection d'air dans la chambre arrière 21B entraine dans un même temps le recul de la bague de blocage 27 pour libérer en translation le corps de vérin 15 de la tige. Avantageusement la canalisation 22 à la chambre de déblocage 27 est de plus gros diamètre, par exemple 4 mm, que la canalisation 26 de la chambre arrière 21B, par exemple 1 mm. Ainsi l'actionnement de la tige 17 débute plus facilement par le déblocage de la bague de blocage 27 avant la pressurisation de la chambre arrière 21B. Cet effet est dû à la réduction de débit dans la chambre arrière 21B qui favorise également un effet d'amorti de la tige 17.

La bague de blocage 27 peut être contrôlée par un dispositif pneumatique à double effet, et donc ne pas comporter de moyen de rappel élastique comme le ressort de blocage 29.

Le dispositif de connexion D peut ne pas comprendre de bague de protection 31 : le diamètre de la tige 17 au niveau de la bague de protection 31 serait alors augmenté pour être apte à retenir les billes de blocage 25 en position escamotée dans la bague de blocage 27, lorsque les billes ne font pas saillie dans la gorge 170.

Les billes de verrouillage 37 pourraient être remplacées par d'autres organes de verrouillage, tels que des doigts, des segments, ou des pions mobiles dans le manchon 35.

De façon similaire, les billes de blocage 25 peuvent être remplacées par des éléments de blocage différents, tels que des segments, des pions, etc.

Les logements 350 des billes de verrouillage 37 peuvent être inclinés de différentes valeurs d'angle a1.

Le manchon 35 peut être réalisé en deux parties attelées.

Le ressort 39 du manchon 35 peut être monté autour de la tige 17 à l'arrière du manchon 35, et non pas à l'intérieur de celui-ci.

La bague de blocage 27 peut ne pas comprendre de surface tronconique 272, qui peut être remplacée par une surface cylindrique.

Le dispositif de connexion D est représenté monté sur la plaque mobile B. En variante, la plaque fixe A peut porter le dispositif de connexion D, tandis que la plaque mobile B porte le canon de verrouillage 70.

Au lieu d'un fonctionnement pneumatique, le dispositif de connexion D peut adopter un fonctionnement hydraulique, avec des joints adaptés.

Cette invention est applicable plus généralement au domaine de la connexion de plaques multi-connexion, notamment pour leur rapprochement final en vue de leur accouplement.

## Revendications

1. Dispositif de connexion (D) entre deux plaques, l'une étant une plaque fixe (A) et l'autre étant une plaque mobile (B), chacune des deux plaques supportant au moins un élément de raccordement (5, 11) de circuit de type hydraulique, pneumatique ou/et électrique destiné à s'accoupler avec un élément de raccordement (5, 11) du même type sur l'autre plaque, le dispositif de connexion étant disposé sur l'une des deux plaques et comprenant :
- un corps de vérin (15) s'étendant le long d'un axe principal (X15) et comprenant une cavité principale (21),
- une tige (17) mobile en translation dans le corps de vérin (15) le long de l'axe principal (X15) du corps de vérin,
- un piston (19), solidaire de la tige (17), mobile au sein de la cavité principale du corps de vérin et scindant la cavité principale entre une chambre avant (21A) et une chambre arrière (21B), le dispositif de connexion comprenant également :
- un manchon (35) qui s'étend autour de la tige (17), ce manchon étant mobile le long de l'axe principal (X15) par rapport au corps de vérin (15) entre une position arrière et une position avant,
- des organes de verrouillage logés dans le manchon (35), chaque organe de verrouillage étant mobile par rapport au manchon entre une configuration de verrouillage où chaque organe de verrouillage est écarté de l'axe principal (X15) et une configuration de dégagement où chaque organe de verrouillage (37) est plus proche de l'axe principal (X15) que dans la configuration de verrouillage, la tige (17) étant mobile le long de l'axe principal (X15) entre :
- une position déconnectée dans laquelle la tige (17) ne s'oppose pas au déplacement des organes de verrouillage dans leur configuration de dégagement, et le manchon (35) est en position avant,
- et une position connectée, dans laquelle la tige (17) s'oppose au déplacement des organes de verrouillage dans leur configuration de dégagement, et le manchon (35) est en position arrière,
- en passant par une position intermédiaire située entre la position déconnectée et la position connectée, dans laquelle la tige (17) s'oppose au déplacement des organes de verrouillage dans leur configuration de dégagement, et le manchon (35) est en position avant.

2. Dispositif de connexion (D) selon la revendication 1, dans lequel le dispositif de connexion (D) comprend des moyens (39) de rappel élastique du manchon (35) en position avant.

3. Dispositif de connexion (D) selon l'une quelconque des revendications 1 à 2, dans lequel le corps de vérin (15) présente une butée mécanique (152A) limitant le déplacement vers l'avant du manchon (35) en position avancée de la tige (17).

4. Dispositif de connexion (D) selon l'une quelconque des revendications 1 à 3, dans lequel les organes de verrouillage sont des billes de verrouillage (37), et dans lequel le manchon (35) comprend des logements radiaux (350) aptes à guider les billes de verrouillage (37) entre leur configuration de verrouillage et leur configuration de dégagement.

5. Dispositif de connexion (D) selon l'une quelconque des revendications 1 à 4, dans lequel la tige (17) comprend une rampe de guidage (176A) des organes de verrouillage entre leur configuration de dégagement et leur configuration de verrouillage.

6. Dispositif de connexion (D) selon la revendication 5, dans lequel la rampe de guidage (176A) présente un diamètre d'appui distal (D1) configuré pour porter les organes de verrouillage dans leur configuration de verrouillage, et dans lequel la tige (17) comprend une gorge (176) juxtaposée sur l'arrière de la rampe de guidage (176A) et présentant un diamètre d'appui proximal (D2) qui permet le déplacement des organes de verrouillage dans la configuration de dégagement.

7. Dispositif de connexion (D) selon l'une quelconque des revendications 1 à 6, dans lequel le dispositif de connexion (D) comprend des moyens de blocage (25, 27, 170) de la tige (17) dans le corps de vérin (15) le long de l'axe principal (X15) de la tige (17) en position connectée.

8. Dispositif de connexion (D) selon la revendication 7, dans lequel les moyens de blocage comprennent au moins une bille de blocage (25) mobile radialement dans un logement (156A) du corps de vérin (15) entre une position en saillie, où la bille de blocage (25) est apte à pénétrer dans une gorge (170) de la tige (17) et à s'opposer au déplacement axial de la tige (17) par rapport au corps de vérin (15), et une position escamotée, où la bille de blocage (25) ne pénètre pas dans la gorge (170) de la tige (17).

9. Dispositif de connexion (D) selon l'une quelconque des revendications 7 ou 8, dans lequel les moyens de blocage comprennent également une bague de blocage (27) mobile dans une cavité auxiliaire (23) du corps de vérin (15) le long de l'axe principal (X15), entre une position de blocage dans laquelle une surface tronconique (272) de la bague de blocage (27) maintient la bille de blocage (25) en saille dans la gorge (170) de la tige (17), et une position de déblocage dans laquelle la bille de blocage (25) est dans sa position escamotée et reçue dans une gorge (270) de la bague de blocage (27).

10. Dispositif de connexion (D) selon la revendication 9, dans lequel la surface tronconique (272) de la bague de blocage (27) définit un cône qui s'évase en direction de la gorge (270) de la bague de blocage.

11. Dispositif de connexion (D) selon l'une quelconque des revendications 9 ou 10, dans lequel le dispositif de connexion comprend un élément élastique (29) de rappel de la bague de blocage (27) vers sa position de blocage.

12. Dispositif de connexion (D) selon l'une quelconque des revendications 8 à 11, dans lequel le dispositif de connexion comprend une bague de protection (31) entourant la tige (17), mobile le long de l'axe principal (X15) dans un canal interne (156B) dans laquelle la tige (17) se déplace, et entrainée par la tige (17) lors de son mouvement de la position intermédiaire vers sa position connectée, entre une position de protection dans laquelle la bague de protection (31) est en regard du logement (156A) du corps de vérin (15) de façon à maintenir la bille de blocage (25) en position escamotée, et une position rétractée dans laquelle la bague de protection (31) ne maintient plus la bille de blocage (25) en position escamotée.

13. Dispositif de connexion (D) selon l'une quelconque des revendication 8 à 12, dans lequel la bague de blocage (27) et la cavité auxiliaire (23) du corps de vérin (15) définissent une chambre (23A) reliée à une canalisation (22) qui permet d'alimenter la chambre (23A) en fluide sous pression.

14. Dispositif de connexion (D) selon l'une quelconque des revendications 1 à 13, dans lequel le dispositif de connexion comprend une première canalisation (24) reliée à la chambre avant (21A) et une seconde canalisation (26) reliée à la chambre arrière (21B), la première canalisation et la seconde canalisation permettant d'alimenter respectivement la chambre avant et la chambre arrière en fluide sous pression.

15. Ensemble de connexion (E) d'une plaque mobile (B) à une plaque fixe (A) comprenant :
- une plaque mobile (B) supportant au moins un premier élément (11) de raccordement de circuit,
- une plaque fixe (A) supportant au moins un élément (5) de raccordement complémentaire du premier élément (11) de la plaque mobile (B),
- au moins un organe de centrage (3, 13) configuré pour positionner la plaque mobile (B) et la plaque fixe (A) l'une par rapport à l'autre,
**caractérisé en ce qu'**une des dites plaques (A, B) comprend un dispositif de connexion (D) selon l'une des revendications précédentes, l'autre des dites plaques (A, B) comprenant un canon de verrouillage (70) définissant une embouchure (S70) apte à retenir axialement les organes de verrouillages du dispositif de connexion (D) dans le canon de verrouillage (70), lorsqu'ils sont dans leur configuration de verrouillage.

## Patentansprüche

1. Verbindungsvorrichtung (D) zwischen zwei Platten, wobei es sich bei der einen um eine feste Platte (A) und bei der anderen um eine bewegliche Platte (B) handelt, wobei jede der zwei Platten mindestens einen Verbindungsanschluss (5, 11) eines Kreislaufs vom Typ hydraulisch, pneumatisch und/oder elektrisch trägt, der ausgelegt ist, um mit einem Anschlusselement (5, 11) des gleichen Typs auf der anderen Platte gekoppelt zu werden, wobei die Verbindungsvorrichtung auf einer der zwei Platten angeordnet ist und Folgendes umfasst:
- einen Zylinderkörper (15), der sich entlang einer Hauptachse (X15) erstreckt und einen Haupthohlraum (21) umfasst,
- einen Stift (17), der im Zylinderkörper (15) entlang der Hauptachse (X15) des Zylinderkörpers in Translation beweglich ist,
- einen Kolben (19), der fest mit dem Stift (17) verbunden ist und im Inneren des Haupthohlraums des Zylinderkörpers beweglich ist und den Haupthohlraum zwischen einer vorderen Kammer (21A) und einer hinteren Kammer (21B) zweiteilt,
wobei die Verbindungsvorrichtung auch Folgendes umfasst:
- eine Muffe (35), die sich um den Stift (17) erstreckt, wobei diese Muffe entlang der Hauptachse (X15) mit Bezug auf den Zylinderkörper (15) zwischen einer hinteren Position und einer vorderen Position beweglich ist,
- Verriegelungsorgane, die in der Muffe (35) aufgenommen sind, wobei jedes Verriegelungsorgan mit Bezug auf die Muffe zwischen einer Verriegelungskonfiguration, in der jedes Verriegelungsorgan von der Hauptachse (X15) beabstandet ist, und einer Freigabekonfiguration, in der jedes Verriegelungsorgan (37) näher an der Hauptachse (X15) als in der Verriegelungskonfiguration ist, beweglich ist,
wobei der Stift (17) entlang der Hauptachse (X15) beweglich ist zwischen:
- einer getrennten Position, in der der Stift (17) sich nicht der Verschiebung der Verriegelungsorgane in ihre Freigabekonfiguration entgegenstellt und sich die Muffe (35) in einer vorderen Position befindet,
- und einer verbundenen Position, in der sich der Stift (17) der Verschiebung der Verriegelungsorgane in ihre Freigabekonfiguration entgegenstellt und sich die Muffe (35) in einer hinteren Position befindet,
- über eine Zwischenposition, die sich zwischen der getrennten Position und der verbundenen Position befindet, wobei sich der Stift (17) der Verschiebung der Verriegelungsorgane in ihre Freigabekonfiguration entgegenstellt und sich die Muffe (35) in der vorderen Position befindet.

2. Verbindungsvorrichtung (D) nach Anspruch 1, wobei die Verbindungsvorrichtung (D) Mittel (39) zur elastischen Rückstellung der Muffe (35) in die vordere Position umfasst.

3. Verbindungsvorrichtung (D) nach einem der Ansprüche 1 bis 2, wobei der Zylinderkörper (15) einen mechanischen Anschlag (152A) aufweist, der die Verschiebung der Muffe (35) nach vorne in die vorgerückte Position des Stifts (17) begrenzt.

4. Verbindungsvorrichtung (D) nach einem der Ansprüche 1 bis 3, wobei die Verriegelungsorgane Verriegelungskugeln (37) sind, und wobei die Muffe (35) radiale Aufnahmen (350) umfasst, die geeignet sind, um die Verriegelungskugeln (37) zwischen ihrer Verriegelungskonfiguration und ihrer Freigabekonfiguration zu führen.

5. Verbindungsvorrichtung (D) nach einem der Ansprüche 1 bis 4, wobei der Stift (17) eine Führungsrampe (176A) der Verriegelungsorgane zwischen ihrer Freigabekonfiguration und ihrer Verriegelungskonfiguration umfasst.

6. Verbindungsvorrichtung (D) nach Anspruch 5, wobei die Führungsrampe (176A) einen distalen Auflagedurchmesser (D1) aufweist, der konfiguriert ist, um die Verriegelungsorgane in ihre Verriegelungskonfiguration zu bringen, und wobei der Stift (17) eine Rille (176) umfasst, die auf der Hinterseite der Führungsrampe (176A) angeordnet ist und einen proximalen Auflagedurchmesser (D2) aufweist, der die Verschiebung der Verriegelungsorgane in die Freigabekonfiguration ermöglicht.

7. Verbindungsvorrichtung (D) nach einem der Ansprüche 1 bis 6, wobei die Verbindungsvorrichtung (D) Blockiermittel (25, 27, 170) des Stifts (17) im Zylinderkörper (15) entlang der Hauptachse (X15) des Stifts (17) in der verbundenen Position umfasst.

8. Verbindungsvorrichtung (D) nach Anspruch 7, wobei die Blockiermittel mindestens eine Blockierkugel (25) umfassen, die in einer Aufnahme (156A) des Zylinderkörpers (15) zwischen einer vorspringenden Position, in der die Blockierkugel (25) dazu in der Lage ist, in eine Rille (170) des Stifts (17) einzudringen und sich der axialen Verschiebung des Stifts (17) mit Bezug auf den Zylinderkörper (15) entgegenzustellen, und einer eingefahrenen Position radial beweglich ist, in der die Blockierkugel (25) nicht in die Rille (170) des Stifts (17) eindringt.

9. Verbindungsvorrichtung (D) nach einem der Ansprüche 7 oder 8, wobei die Blockiermittel auch einen Blockierring (27) umfassen, der in einem Hilfshohlraum (23) des Zylinderkörpers (15) entlang der Hauptachse (X15) zwischen einer Blockierposition, in der eine kegelstumpfförmige Fläche (272) des Blockierrings (27) die Blockierkugel (25) in der Rille (170) des Stifts (17) in Vorsprung hält, und einer Freisetzungsposition, in der sich die Blockierkugel (25) in ihrer eingefahrenen Position befindet und in einer Rille (270) des Blockierrings (27) aufgenommen ist, beweglich ist.

10. Verbindungsvorrichtung (D) nach Anspruch 9, wobei die kegelstumpfförmige Fläche (272) des Blockierrings (27) einen Kegel definiert, der sich in Richtung der Rille (270) des Blockierrings verbreitert.

11. Verbindungsvorrichtung (D) nach einem der Ansprüche 9 oder 10, wobei die Verbindungsvorrichtung ein elastisches Element (29) zur Rückstellung des Blockierrings (27) in seine Blockierposition umfasst.

12. Verbindungsvorrichtung (D) nach einem der Ansprüche 8 bis 11, wobei die Verbindungsvorrichtung einen Schutzring (31) umfasst, der den Stift (17) umgibt, der entlang der Hauptachse (X15) in einem inneren Kanal (156B) beweglich ist, in dem sich der Stift (17) verschiebt, und angetrieben vom Stift (17) bei seiner Bewegung aus der Zwischenposition in seine verbundene Position, zwischen einer Schutzposition, in der der Schutzring (31) gegenüber der Aufnahme (156A) des Zylinderkörpers (15) ist, um die Blockierkugel (25) in der eingefahrenen Position zu halten, und einer zurückgezogenen Position, in der der Schutzring (31) die Blockierkugel (25) nicht mehr in der eingefahrenen Position hält.

13. Verbindungsvorrichtung (D) nach einem der Ansprüche 8 bis 12, wobei der Blockierring (27) und der Hilfshohlraum (23) des Zylinderkörpers (15) eine Kammer (23A) definieren, die mit einer Rohrleitung (22) verbunden ist, die ermöglicht, die Kammer (23A) mit Fluid unter Druck zu versorgen.

14. Verbindungsvorrichtung (D) nach einem der Ansprüche 1 bis 13, wobei die Verbindungsvorrichtung eine erste Rohrleitung (24) umfasst, die mit der vorderen Kammer (21A) verbunden ist, und eine zweite Rohrleitung (26), die mit der hinteren Kammer (21B) verbunden ist, wobei die erste Rohrleitung und die zweite Rohrleitung ermöglichen, die vordere Kammer bzw. die hintere Kammer mit Fluid unter Druck zu versorgen.

15. Verbindungsgruppe (E) einer beweglichen Platte (B) mit einer festen Platte (A), umfassend:
- eine bewegliche Platte (B), die mindestens ein erstes Kreislaufanschlusselement (11) trägt,
- eine feste Platte (A), die mindestens ein zusätzliches Anschlusselement (5) des ersten Elements (11) mit beweglicher Platte (B) trägt,
- mindestens ein Zentrierorgan (3, 13), das konfiguriert ist, um die bewegliche Platte (B) und die feste Platte (A) mit Bezug aufeinander zu positionieren,
**dadurch gekennzeichnet, dass** eine der Platten (A, B) eine Verbindungsvorrichtung (D) nach einem der vorhergehenden Ansprüche umfasst, wobei die andere der Platten (A, B) einen Verriegelungslauf (70) umfasst, der einen Ansatz (S70) definiert, der dazu geeignet ist, die Verriegelungsorgane der Verbindungsvorrichtung (D) im Verbindungslauf (70) axial zurückzuhalten, wenn sie sich in ihrer Verriegelungskonfiguration befinden.

## Claims

1. A connection device (D) between two plates, one being a fixed plate (A) and the other being a movable plate (B), each of the two plates supporting at least one hydraulic, pneumatic and/or electrical type circuit connection element (5, 11) intended to pair with a connection element (5, 11) of the same type on the other plate, the connection device being disposed on one of the two plates and comprising:
- a cylinder body (15) extending along a central axis (X15) and comprising a main cavity (21),
- a shaft (17) movable in translation within the cylinder body (15) along the central axis (X15) of the cylinder body,
- a piston (19), integral with the shaft (17), movable within the main cavity of the cylinder body and dividing the main cavity between a front chamber (21A) and a rear chamber (21B),
the connection device comprising further:
- a sleeve (35) extending around the shaft (17), this sleeve being movable along the central axis (X15) with respect to the cylinder body (15) between a rear position and a front position,
- locking members housed in the sleeve (35), each locking member being movable relative to the sleeve between a locking configuration where each locking member is spaced from the central axis (X15) and a release configuration where each locking member (37) is closer to the central axis (X15) than in the locking configuration,
the shaft (17) being movable along the central axis (X15) between:
- a disconnected position in which the shaft (17) does not oppose the movement of the locking members in their release configuration, and the sleeve (35) is in the forward position,
- and a connected position, in which the shaft (17) opposes the movement of the locking members in their release configuration, and the sleeve (35) is in a rear position,
- through an intermediate position between the release position and the connected position, in which the shaft (17) resists movement of the locking members into their release configuration, and the sleeve (35) is in the forward position.

2. The connection device (D) according to claim 1, wherein the connection device (D) comprises means (39) for elastically returning the sleeve (35) to the front position.

3. The connection device (D) according to any one of claims 1 to 2, wherein the cylinder body (15) has a mechanical stop (152A) limiting the forward displacement of the sleeve (35) in the front position of the shaft (17).

4. The connection device (D) according to any one of claims 1 to 3, wherein the locking members are locking balls (37), and wherein the sleeve (35) comprises radial recesses (350) able to guide the locking balls (37) between their locking configuration and their release configuration.

5. The connection device (D) according to any one of claims 1 to 4, wherein the shaft (17) comprises a guide ramp (176A) for the locking members between their release configuration and their locking configuration.

6. The connection device (D) according to claim 5, wherein the guide ramp (176A) presents a distant bearing diameter (D1) configured to carry the locking members in their locking configuration, and wherein the shaft (17) comprises a groove (176) juxtaposed on the rear of the guide ramp (176A) and presenting an adjacent bearing diameter (D2) that allows movement of the locking members into the release configuration.

7. The connection device (D) according to any one of claims 1 to 6, wherein the connection device (D) comprises means for locking (25, 27, 170) the shaft (17) in the cylinder body (15) along the central axis (X15) of the shaft (17) in the connected position.

8. The connection device (D) according to claim 7, wherein the locking means comprise at least one locking ball (25) radially movable in a recess (156A) of the cylinder body (15) between a projecting position, where the locking ball (25) is able to penetrate into a groove (170) of the shaft (17) and to oppose the axial displacement of the shaft (17) relative to the cylinder body (15), and a retracted position, where the locking ball (25) does not penetrate into the groove (170) of the shaft (17).

9. The connection device (D) according to any one of claims 7 or 8, wherein the locking means also comprise a locking ring (27) movable in an auxiliary cavity (23) of the cylinder body (15) along the central axis (X15), between a locking position in which a truncated conical surface (272) of the locking ring (27) holds the locking ball (25) projecting into the groove (170) of the shaft (17), and a release position in which the locking ball (25) is in its retracted position and received in a groove (270) of the locking ring (27).

10. The connection device (D) according to claim 9, wherein the truncated conical surface (272) of the locking ring (27) defines a taper that flares towards the groove (270) of the locking ring.

11. The connection device (D) according to any one of claims 9 or 10, wherein the connection device comprises an elastic member (29) for pushing the locking ring (27) towards its locking position.

12. The connection device (D) according to any one of claims 8 to 11, wherein the connection device comprises a protection ring (31) surrounding the shaft (17), movable along the central axis (X15) in an internal channel (156B) in which the shaft (17) moves, and driven by the shaft (17) during its movement from the intermediate position to its connected position, between a protected position in which the protection ring (31) faces the recess (156A) of the cylinder body (15) so as to hold the locking ball (25) in a retracted position, and a retracted position in which the protective ring (31) no longer holds the locking ball (25) in a retracted position.

13. The connection device (D) according to any one of claims 8 to 12, wherein the locking ring (27) and the auxiliary cavity (23) of the cylinder body (15) define a chamber (23A) connected to a pipe (22) that allows the chamber (23A) to be supplied with fluid under pressure.

14. The connection device (D) according to any one of claims 1 to 13, wherein the connection device comprises a first pipe (24) connected to the front chamber (21A) and a second pipe (26) connected to the rear chamber (21B), the first pipe and the second pipe allowing to supply the front chamber and the rear chamber, respectively, with fluid under pressure.

15. A connection assembly (E) of a mobile plate (B) to a fixed plate (A) comprising:
- a movable plate (B) supporting at least a first circuit connection element (11),
- a fixed plate (A) supporting at least one connecting element (5) complementary to the first element (11) of the mobile plate (B),
- at least one centering member (3, 13) configured to position the movable plate (B) and the fixed plate (A) relative to each other,
**characterized in that** one of the said plates (A, B) comprises a connection device (D) according to one of the preceding claims, the other of the said plates (A, B) comprising a locking barrel (70) defining a mouth (S70) able to axially retain the locking members of the connection device (D) in the locking barrel (70), when they are in their locking configuration.
